# EUROPÄISCHE PATENTSCHRIFT

(11) **EP 1 325 984 B1**
(45) Veröffentlichungstag und Bekanntmachung des Hinweises auf die Patenterteilung: **02.06.2010**
(21) Anmeldenummer: 02029088.8
(22) Anmeldetag: 30.12.2002
(51) Int. Cl.: E01C 19/20

(54) **Streustoffbehälter mit Streustoffklumpenzerkleinerer**
Container with crusher for spreadable granular material
Conteneur avec concasseur pour matière granulaire répandable

(30) Priorität: 03.01.2002 DE 10200086
(43) Veröffentlichungstag der Anmeldung: 09.07.2003
(73) Patentinhaber: Küpper-Weisser GmbH, 78199 Bräunlingen (DE)
(72) Erfinder: Rosenstihl, Paul, 78199 Bräunlingen (DE); Dankwardt, Reinhold, 78166 Donaueschingen (DE)
(74) Vertreter: Klunker . Schmitt-Nilson . Hirsch

(56) Entgegenhaltungen:
- DE-A- 1 457 853
- DE-U- 1 937 346
- DE-U- 20 100 900
- DE-U- 29 914 407
- FR-A- 968 362
- NL-A- 8 201 441

## Beschreibung

Die Erfindung betrifft einen Streustoffbehälter gemäß dem Oberbegriff des Anspruchs 1.Derartige Streustoffbehälter sind beispielsweise aus DE 1 937 346 bekannt; sie sind als Aufsatz von Winterdienstfahrzeugen zum Aufnehmen und kontrollierten Ausbringen von Streusalz auf eine Fahrbahnoberfläche bekannt.

Die Streustoffbehälter haben üblicherweise einen konkaven Querschnitt, damit der Streustoff durch Schwerkraftwirkung zum Behältergrund sinkt. Dort wird er mittels dem Streustoff-Förderer zur Streustoffaustragöffnung und durch diese hindurch aus dem Streustoffbehälter hinausgefördert. Der Streustoffbehälter und der Behältergrund besitzen üblicherweise eine Längserstreckung in Fahrtrichtung des Streufahrzeugs. Als Streustoff-Förderer bietet sich daher die Verwendung eines entgegen der Fahrtrichtung umlaufenden Bandes am Behältergrund an, um das von den schrägen Wänden des Streustoffbehälters nachrutschende Streugut durch die Austragöffnung aus dem Behälter hinauszubefördern.

Ein grundsätzliches Problem ergibt sich, wenn das Streugut aufgrund ungünstiger Lagerbedingungen verklumpt. Dann ist ein gleichmäßiger Austrag des Streuguts nicht immer gewährleistet. Dieses Problem ergibt sich beispielsweise bei Streusalz, wenn das Salz während der Lagerung zunächst feucht wird und anschließend wieder trocknet. Das Phänomen des Zusammenklumpens der Salzkörner ist insbesondere bei der Verwendung von Siedesalz festzustellen, welches bei einem Feuchtigkeitsgrad von mehr als 1% zum Verkleben neigt, und verstärkt sich bei Temperaturen von weniger als -3°C. Bisweilen sind die Klumpen so groß, dass sie bei Streumaschinen mit Bandfördersystem nicht durch die Dosieröffnung am Austritt des Behälters passen. Bei Schneckenfördersystemen ist dieses System weniger gravierend, da die Förderschnecken auch eine Zerkleinerungsfunktion übernehmen. Bei Förderbändern kann das Verklumpen des Salzes sogar dazu führen, dass der Salzteppich auf dem Förderband unterbrochen wird, so dass die Dosierungsgenauigkeit entsprechend verfälscht und die Streumaschine letztendlich zeitweise wesentlich weniger streut als vorgesehen.

Um diesem Problem zu begegnen, ist es bekannt, einen Streustoffklumpenzerkleinerer nahe der Austragöffnung im Förderbereich des Streustoff-Förderers anzuordnen, der das auszutragende Streugut nach Art eines Rührstabs aufrührt und sich horizontal und quer zum Transportband erstreckt. Dabei wird verklumptes Streugut unmittelbar vor der Austragöffnung zerkleinert, so dass es durch die Austragöffnung hindurchpaßt.

Als nachteilhaft hat sich jedoch herausgestellt, dass das verklumpte Streugut lediglich in Scheiben geschnitten und nicht vollständig zerkleinert wird. Im ungünstigsten Fall kann es daher trotz des Zerkleinerers zu einem Verstopfen der Austragöffnung kommen. Aber selbst im günstigeren Fall verbleiben doch zumindest einige größere Klumpen, so dass der Streustoffaustrag nicht so gleichmäßig ist, wie es für eine zuverlässige Streuung zur Verhinderung der Glatteisbildung notwendig wäre.

Aus der DE-A-1 457 853 ist ein Streugerät für körniges oder pulverförmiges Gut bekannt, in dessen Behälter ein Rührwerk mit stabförmiger Achse angeordnet ist, an der Rührarme angebracht sind. Damit wird das auszustreuende Material in dem Behälter locker gehalten.

Die DE-U-201 00 900 beschreibt einen Miststreuer, der zum Ausbringen von Schnee beim Anlegen von Langlaufloipen zweckentfremdet wird. Am hinteren Ende des Kratzhodens der Ladefläche sind vertikale Fräswalzen vorgesehen, die von einem Abstreukasten abgedeckt sind und unter denen sich jeweils ein Wurfteller befindet. Die Fräswalzen zerkleinern den Schnee, schleudern ihn in den Abstreukasten und von dort gelangt er mittels der Wurfteller auf den Boden.

Aufgabe der vorliegenden Erfindung ist es, einen Streustoffbehälter, sowie ein Winterdienstfahrzeug mit einem solchen Streustoffbehälter zur Verfügung zu stellen, bei dem der auszutragende Streustoff im Falle seines Verklumpens zuverlässig zerkleinert wird, um einen gleichmäßigen Streustoffaustrag zu erzielen.

Diese Aufgabe wird erfindungsgemäß durch einen Streustoffbehälter und ein Winterdienstfahrzeug mit einem solchen Streustoffbehälter gemäß dem Anspruch 1 gelöst. In davon abhängigen Ansprüchen sind vorteilhafte Weiterbildungen und Ausgestaltungen der Erfindung angegeben.

Erfindungsgemäß ist der Streustoffklumpenzerkleinerer als vertikaler, senkrecht zur Förderrichtung ausgerichteter Rührstab mit mindestens einem in den Förderbereich des Streustoffförderers ragenden Rührer ausgestattet. Es hat sich gezeigt, dass ein derart angeordneter Rührstab verklumptes Streugut wesentlich zuverlässiger zerkleinert, als dies mit einem herkömmlichen, horizontal und quer zum Förderband ausgerichteten Rührstab der Fall ist. Statt eines einzelnen Rührstabs können auch mehrere Rührstäbe eingesetzt werden, um die Effektivität zu erhöhen.

Vorzugsweise ist der Antrieb des Rührstabs mit dem Antrieb des Förderbands permanent gekoppelt, damit unabhängig von der Fördergeschwindigkeit eine gleichmäßige Zerkleinerung des Streuguts sichergestellt ist. Das heißt, der Antriebsmotor des Rührstabs ist im Rücklauf des Bandantriebs angeschlossen. Die Größe des Hydraulikmotors ist so ausgewählt, daß die Drehzahl des Rührstabs ein Vielfaches der Antriebsrolle des Förderbandes beträgt. Der Rührstab selbst ist vorzugsweise an der senkrechten Rückwand des Behälters montiert.

Die Rührer des Rührstabs stehen vorzugsweise radial vom Rührstab ab, können aber auch in Umfangsrichtung und/oder in Achsrichtung des Rührstabs geneigt sein. Die Rührer können als Winkelbleche mit unterschiedlichen Knickwinkeln ausgebildet sein, so dass verklumptes Streugut im Falle von radial vom Rührstab abstehenden Rührern einerseits horizontal durchschnitten und andererseits entlang einer Kreisbahn schräg oder vertikal durchschnitten wird. Die schräg oder vertikal ausgerichtete, kreisförmige Schneidbahn in Kombination mit der translatorischen Vorwärtsbewegung des auf dem Förderband transportierten Salzstocks führt zu besonders guten Zerkleinerungsergebnissen. Die Rührer sind über die Länge und den Umfang des Rührstabs verteilt, und können unterschiedliche Längen besitzen. Dadurch wird sichergestellt, daß alle Bereiche des Streuguts im Rührbereich liegen, erfaßt und zerkleinert werden. Darüber hinaus können die Winkelbleche einerseits nach oben und andererseits nach unten abgewinkelt sein oder beispielsweise so geschlitzt sein, dass der eine Teil des Blechs nach oben und der andere Teil nach unten abgewinkelt sind.

Nachfolgend wird die Erfindung beispielhaft anhand der begleitenden Zeichnungen erläutert. Darin zeigen:
- Figur 1: Schematisch ein Streufahrzeug mit einem erfindungsgemäßen Streustoffbehälter;
- Figur 2: den Streustoffbehälter aus Figur 1 von oben; und
- Figuren 3a und 3b: zwei Ausführungsformen eines Rührstabs.

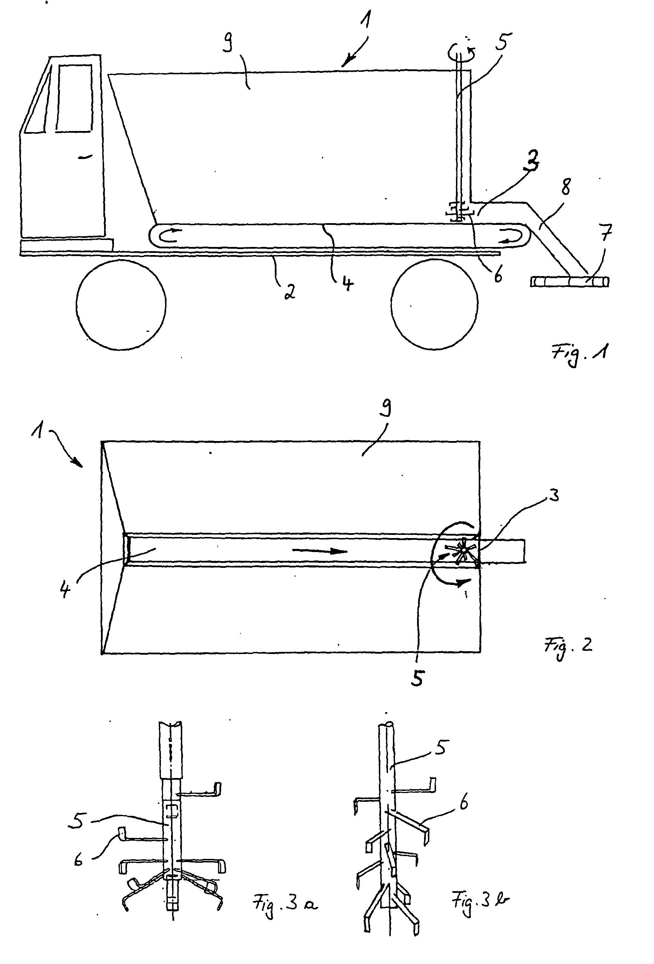

Figur 1 zeigt schematisch vereinfacht einen Streustoffbehälter 1 auf einer Ladefläche 2 eines Winterdienstfahrzeugs. Am Grund des Streustoffbehälters 1 befindet sich ein entgegen der Fahrtrichtung des Streufahrzeugs transportierendes Förderband 4, welches Streugut aus dem Streustoffbehälter 1 zur Austragöffnung 3 und durch diese Austragöffnung 3 hindurch bis zu einem Trichter 8 transportiert, durch den hindurch das Streugut auf einen sich drehenden Streuteller 7 fällt, der es in radialer Richtung abwirft. Fahrzeuggeschwindigkeit, Förderbandtransportgeschwindigkeit und Streutellerdrehzahl sind aufeinander abgestimmt, um unabhängig von der Fahrzeuggeschwindigkeit eine optimale Streubreite und Streudichte zu erzielen. Als weitere Einflußgröße kann beispielsweise auch der Öffnungsquerschnitt der Austragöffnung 3 variierbar sein.

Figur 2 zeigt den Streustoffbehälter 1 aus Figur 1 in Draufsicht. Die Behälterwände 9 des Streustoffbehälters 1 sind zum Förderband 4 am Grund des Streustoffbehälters 1 hin geneigt und man erkennt, dass das die Behälterwände 9 hinabrutschende Streugut von dem Förderband 4 durch die Austragöffnung 3 hindurch aus dem Streustoffbehälter 1 herausbefördert wird.
In unmittelbarer Nähe zur Austragsöffnung 3 und in Transportrichtung des Förderbands 4 vor dieser Austragsöffnung 3 ist ein Rührstab 5 mit vertikaler Drehachse positioniert. Am unteren, dem Förderband 4 nächstgelegenen Ende des Rührstabs 5 besitzt der Rührstab 5 Rührer 6 in Form von an den Rührstab 5 angeschweißten und von diesem in radialer Richtung abstehenden Winkelblechen.

In Figur 1 ist der Rührstab 5 mit dem Rührer 6 in Seitenansicht zu sehen. In Figur 2 sieht man den Rührstab 5 dagegen in Axialrichtung von oben. Mehrere Rührer 6 sind am unteren Ende des Rührstabs 5 in Längsrichtung und Umfangsrichtung unregelmäßig verteilt angeordnet und besitzen unterschiedliche Längen.

Sie sind teilweise nach oben und teilweise nach unten abgewinkelt. In Figuren 3a und 3b sind zwei alternative Ausgestaltungen des unteren Abschnitts des Rührstabs 5 mit den Rührern 6 vergrößert dargestellt. Während in Fig. 3a alle Rührer 6 als Winkelbleche mit 90° Knickwinkel ausgebildet sind, besitzen die Rührer 6 in Fig. 3b unterschiedliche Knickwinkel, so daß der abgewinkelte Teil der Rührer in diesem Falle alle parallel zur Drehachse des Rührstabs ausgerichtet sind.

### Bezugsziffern

- 1.: Streustoffbehälter
- 2.: Ladefläche
- 3.: (Streustoff-) Austragöffnung
- 4.: Streustoff-Förderer
- 5.: Streustoffklumpenzerkleinerer, Rührstab
- 6.: Rührer
- 7.: Streuteller
- 8.: Trichter
- 9.: Behälterwand

## Patentansprüche

1. Streustoffbehälter (1), umfassend eine Streustoffaustragöffnung (3), ein umlaufendes Transportband (4), das eingerichtet ist, Streugut aus dem Streustoffbehälter (1) zur Streustoffaustragöffnung (3) und durch die Streustoffaustragöffnung (3) hindurch zu transportieren, indem sich das Transportband (4) in Förderrichtung bis hinter die Streustoffaustragöffnung (3) erstreckt, und einen in Förderrichtung nahe vor der Streustoffaustragöffnung (3), im Förderbereich des Transportbands (4) angeordneten Streustoffklumpenzerkleinerer (5), **dadurch gekennzeichnet, dass** der Streustoffklumpenzerkleinerer, bezogen auf eine horizontal ausgerichtete Streustoffförderung, einen oder mehr als einen vertikal ausgerichteten Rührstab mit mindestens einem in den Förderbereich des Transportbands (4) ragenden Rührer (6) umfasst.

2. Streustoffbehälter nach Anspruch 1, wobei der Rührstab (5) und das Transportband (4) antriebsmäßig miteinander gekoppelt sind.

3. Streustoffbehälter nach einem der Ansprüche 1 oder 2, wobei der mindestens eine Rührer (6) vom Rührstab (5) radial nach außen absteht.

4. Streustoffbehälter nach Anspruch 3, wobei der mindestens eine Rührer (6) ein Winkelblech umfasst.

5. Streustoffbehälter nach einem der Ansprüche 1 bis 4, wobei mehrere Rührer (6) über den Umfang und einen Längenabschnitt des Rührstabs (5) verteilt sind.

6. Streustoffbehälter nach einem der Ansprüche 3 bis 5 mit mehreren Rührern (6), die sich in ihrer Länge unterscheiden.

7. Streustoffbehälter nach einem der Ansprüche 4 bis 6 mit mehreren Rührern (6), die in entgegengesetzter Richtung abgewinkelt sind.

8. Streustoffbehälter nach einem der Ansprüche 4 bis 7 mit mehreren Rührern, von denen mindestens zwei unterschiedliche Knickwinkel besitzen.

9. Winterdienstfahrzeug, umfassend einen Streustoffbehälter nach einem der Ansprüche 1 bis 8.

10. Winterdienstfahrzeug nach Anspruch 9, **gekennzeichnet durch** einen drehbaren Streuteller (7) sowie **durch** einen Trichter (8) am Ende des Transportbands (4), **durch** den hindurch vom Transportband (4) transportiertes Streugut auf den Streuteller (7) fallen kann, wobei der Streuteller dazu ausgebildet ist, das Streugut radial abzuwerfen.

11. Verwendung des Winterdienstfahrzeugs nach Anspruch 9 oder 10 zum Ausbringen von Streusalz auf eine Fahrbahnoberfläche.

## Claims

1. A spreading material container (1) comprising a spreading material discharge opening (3), a circulating conveyor belt (4) adapted to conveying spreading material from the spreading material container (1) to the spreading material discharge opening (3) and through the spreading material discharge opening (3), in that the conveyor belt (4) extends in the direction of conveyance beyond the spreading material discharge opening (3), and a spreading material clod comminutor (5) arranged in the direction of conveyance closely in front of the spreading material discharge opening (3), in the conveyance area of the conveyor belt (4), **characterized in that** the spreading material clod comminutor, with reference to a horizontally oriented spreading material conveyance, comprises one or more than one vertically oriented stirring rod(s) having at least one stirrer (6) projecting into the conveyance area of the conveyor belt (4).

2. The spreading material container according to claim 1, with the stirring rod (5) and the conveyor belt (4) being operatively coupled.

3. The spreading material container according to any of claims 1 or 2, with the at least one stirrer (6) projecting radially outwardly from the stirring rod (5).

4. The spreading material container according to claim 3, the at least one stirrer (6) comprising an angle plate.

5. The spreading material container according to any of claims 1 to 4, with a plurality of stirrers (6) being distributed over the circumference and a length portion of the stirring rod (5).

6. The spreading material container according to any of claims 3 to 5 with a plurality of stirrers (6) which differ from each other with regard to their length.

7. The spreading material container according to any of claims 4 to 6 with a plurality of stirrers (6) which are angled in opposite directions.

8. The spreading material container according to any of claims 4 to 7 with a plurality of stirrers of which at least two have different articulation angles.

9. A winter service vehicle comprising a spreading material container according to any of claims 1 to 8.

10. The winter service vehicle according to claim 9, **characterized by** a rotatable spreading disk (7) and by a funnel (8) at the end of the conveyor belt (4), through which spreading material conveyed by the conveyor belt (4) can drop onto the spreading disk (7), with the spreading disk being adapted to discharging the spreading material radially.

11. Use of the winter service vehicle according to claim 9 or 10 for spreading road salt onto a road surface.

## Revendications

1. Réservoir à matériau d'épandage (1) comprenant une ouverture de répartition de matériau d'épandage (3), un bande transporteuse tournante (4) équipée pour transporter du matériau d'épandage du réservoir à matériau d'épandage (1) à l'ouverture de répartition de matériau d'épandage (3) et à travers l'ouverture de répartition de matériau d'épandage (3), la bande transporteuse (4) s'étendant jusque derrière l'ouverture de répartition de matériau d'épandage (3) dans le sens de l'acheminement, et un broyeur de mottes de matériau d'épandage (5) agencé peu avant l'ouverture de répartition de matériau d'épandage (3) dans le sens de l'acheminement, dans la zone d'acheminement de la bande transporteuse (4), **caractérisé en ce que** le broyeur de mottes de matériau d'épandage comprend un ou plus d'un bras mélangeur orienté verticalement par rapport à un acheminement de matériau d'épandage orienté horizontalement, lequel bras mélangeur comporte au moins un agitateur (6) faisant saillie dans la zone d'acheminement de la bande transporteuse (4).

2. Réservoir à matériau d'épandage selon la revendication 1, le bras mélangeur (5) et la bande transporteuse (4) étant couplés l'un à l'autre en entraînement.

3. Réservoir à matériau d'épandage selon une des revendications 1 ou 2, le au moins un agitateur (6) dépassant radialement du bras mélangeur (5) vers l'extérieur.

4. Réservoir à matériau d'épandage selon la revendication 3, le au moins un agitateur (6) comprenant une tôle en équerre.

5. Réservoir à matériau d'épandage selon une des revendications de 1 à 4, plusieurs agitateurs (6) étant répartis sur le périmètre et une section de longueur du bras mélangeur (5).

6. Réservoir à matériau d'épandage selon une des revendications de 3 à 5, comprenant plusieurs agitateurs (6) qui se différencient quant à leur longueur.

7. Réservoir à matériau d'épandage selon une des revendications de 4 à 6, comprenant plusieurs agitateurs (6) qui sont coudés en direction opposée.

8. Réservoir à matériau d'épandage selon une des revendications de 4 à 7, comprenant plusieurs agitateurs (6) dont au moins deux possèdent des angles de coudage différents.

9. Véhicule de service d'hiver, comprenant un réservoir à matériau d'épandage selon une des revendications de 1 à 8.

10. Véhicule de service d'hiver selon la revendication 9, **caractérisé par** un disque d'épandage (7) rotatif ainsi que par une trémie (8) à l'extrémité de la bande transporteuse (4), trémie à travers laquelle du matériau d'épandage transporté par la bande transporteuse (4) peut tomber sur le disque d'épandage (7), le disque d'épandage étant conçu de manière à projeter radialement le matériau d'épandage.

11. Utilisation du véhicule de service d'hiver selon la revendication 9 ou 10 pour l'épandage de sel d'épandage sur une surface de chaussée.
